# EUROPÄISCHE PATENTSCHRIFT

(11) **EP 1 253 045 B1**
(45) Veröffentlichungstag und Bekanntmachung des Hinweises auf die Patenterteilung: **30.06.2004**
(21) Anmeldenummer: 02005715.4
(22) Anmeldetag: 13.03.2002
(51) Int. Cl.: B60R 3/00

(54) **Vorrichtung zum Festsetzen eines Anbauelements an eine Aufbaustruktur eines Kraftfahrzeugs**
Apparatus for attaching a mounting element to a vehicle body structur
Dispositif d'attache pour un élément de montage à une structure de carrosserie de véhicule automobile

(30) Priorität: 26.04.2001 DE 10120444
(43) Veröffentlichungstag der Anmeldung: 30.10.2002
(73) Patentinhaber: Dr.Ing. h.c.F. Porsche Aktiengesellschaft, 70435 Stuttgart (DE)
(72) Erfinder: Benirschke, Oliver, 71229 Leonberg (DE)

(56) Entgegenhaltungen:
- DE-U- 29 900 510
- US-A- 5 193 829
- US-A- 5 382 035
- US-B1- 6 173 979

## Beschreibung

Die Erfindung bezieht sich auf eine Vorrichtung zum Festsetzen eines Anbauelements, insbesondere eines Trittbrettes oder einer Schwellerverkleidung an eine Aufbaustruktur eines Kraftfahrzeugs nach dem Oberbegriff des Patentanspruchs 1.

Aus der US 5,193,829 ist ein an ein Kraftfahrzeug anbaubares Trittbrett bekannt, das über Befestigungselemente mit dem Fahrzeugaufbau verbindbar ist. Aus der DE-U-299 00 510 ist eine gattungsgemäße Trägerkonstruktion zur Befestigung eines Trittbrettes an einer Fahrzeugkarosserie bekannt. Dieses Trittbrett wird mittels einer Trägerkonstruktion am Fahrzeugschweller gehalten. Die Verbindung des Trittbrettes mit der Trägerkonstruktion erfolgt über Befestigungsmittel, wobei das Trittbrett ein vorderes Profilende der Trägerkonstruktion umgreift. Das Trägerprofil ist als Rangprofilkonstruktion ausgeführt und weist einen Hohlprofilabschnitt zur Befestigung an der Fahrzeugkarosserie und zur Anordnung des Formteiles auf.

Aufgabe der Erfindung ist es, eine verbesserte Vorrichtung zum Festsetzen von Anbauelementen, wie ein Trittbrett oder eine Schwellerverkleidung an eine Aufbaustruktur eines Kraftfahrzeugs zu schaffen, die einfach zu montieren und auszuwechseln ist und eine stabile Befestigung zum Fahrzeugaufbau gewährleistet und einen Unterbodenschutz bildet.

Diese Aufgabe wird erfindungsgemäß durch die kennzeichnenden Merkmale des Patentanspruchs 1 gelöst. Weitere vorteilhafte Merkmale beinhalten die Unteransprüche.

Die mit der Erfindung hauptsächlich erzielten Vorteile bestehen darin, daß wahlweise ein Trittbrett oder eine Schwellerverkleidung in einfacher Weise ans Fahrzeug montierbar ist und bei Verwendung eines Trittbretts eine optimale Trittfestigkeit gewährleistet ist und das Trittbrett und die Schwellerverkleidung und ein verbundenes Trägerprofil gleichzeitig einen Schutz der Unterbodenstruktur sowie von Aggregaten gewährleistet.

Hierzu weisen die Aufbauelemente mit einem leistenartigen Trägerprofil korrespondierende und im Querschnitt konkav und konvex ausgebildete Profillängskanten auf, die miteinander verbindbar sind. Das Trägerprofil ist einerseits über am Fahrzeugaufbau beabstandet angeordnete Befestigungskonsolen und andererseits über die Befestigungselemente am Trägerprofil mit dem Fahrzeugaufbau fest verbindbar.

Zur Erreichung einer ausreichenden Stabilität des Trittbretts und einer einfachen Montierbarkeit bzw. Verbindbarkeit mit dem Trägerprofil besteht es aus einem Hohlprofil mit einer horizontal ausgerichteten Trittfläche, an die sich eine innere ausgerundete Wand und eine äußere etwa gradlinig ausgeführte Wand anschließt und an diese beiden Wände sich endseitig die im Querschnitt konkave Profillängskante des Anbauelements anschließt, welche die im Querschnitt konvexe Profillängskante des Trägerprofils beidseitig übergreift.

Zur einhakenden Verbindung weist die konkave Profillängskante des Anbauelements einen oben liegenden abgewinkelten Schenkel auf, der eine Profilkante der konvexen Profillängskante des Trägerprofils hakend übergreift und eine untenliegende anschließende Wand des Anbauelements ausgerundet ist und an einer korrespondierenden Wand der Profillängskante des Trägerprofils anliegt. Somit kann das Trittbrett oder die Schwellerverkleidung durch Verschwenken gegenüber dem Trägerprofil in die Profillängskante des Trägerprofils eingehängt bzw. aus dieser ausgehängt werden.

Die formschlüssige Verbindung der Profillängskanten kann zwischen dem Anbauelement und dem Trägerprofil durch Schrauben oder Niete festgelegt werden.

Die unmittelbare Verbindung des Trägerprofils mit dem Fahrzeugaufbau erfolgt über im vorderen, hinteren und mittleren Bereich des Fahrzeugaufbaus angesetzte Befestigungskonsolen, die mit dem Fahrzeugaufbau verbunden sind wobei das Trägerprofil über zusätzliche Befestigungsstege am Fahrzeugaufbau befestigbar ist. Die Befestigungskonsolen weisen etwa in einer horizontalen Ebene ausgerichtete Anschraubflächen für das Trägerprofil auf, wobei die Bohrungen für die Befestigungsschrauben etwa in einer mittigen senkrechten Längsebene des Trägerprofils angeordnet sind.

Durch die Verbindung des Trägerprofils über die am Fahrzeugaufbau befestigten Konsolen sowie zusätzlich über die Befestigungselemente wird eine stabile, lösbare Anbindung an den Fahrzeugaufbau hergestellt, so daß das Trägerprofil ein belastbares Trittbrett aufnehmen kann.

Das Trägerprofil kann zur Abdeckung eines Zwischenraumes zwischen Längsträger und Schweller des Fahrzeugs ein Verkleidungsblech aufweisen, das die vordere Befestigungskonsole mit aufnimmt.

Zur Geräuschminderung können zwischen dem Anbauelement und dem Trägerprofil Schaumstoffeinlagen vorgesehen sein.

Zur Abdichtung der offenen Enden des Trittbretts bzw. der Schwellerverkleidung und des Trägerprofils sind Endkappen vorgesehen, die unter Zwischenschaltung eines Dichtelements dicht abschließend mit dem Anbauelement bzw. dem Trägerprofil verbunden werden.

Ein Ausführungsbeispiel der Erfindung ist in den Zeichnungen dargestellt und wird im folgenden näher beschrieben.
Es zeigen:

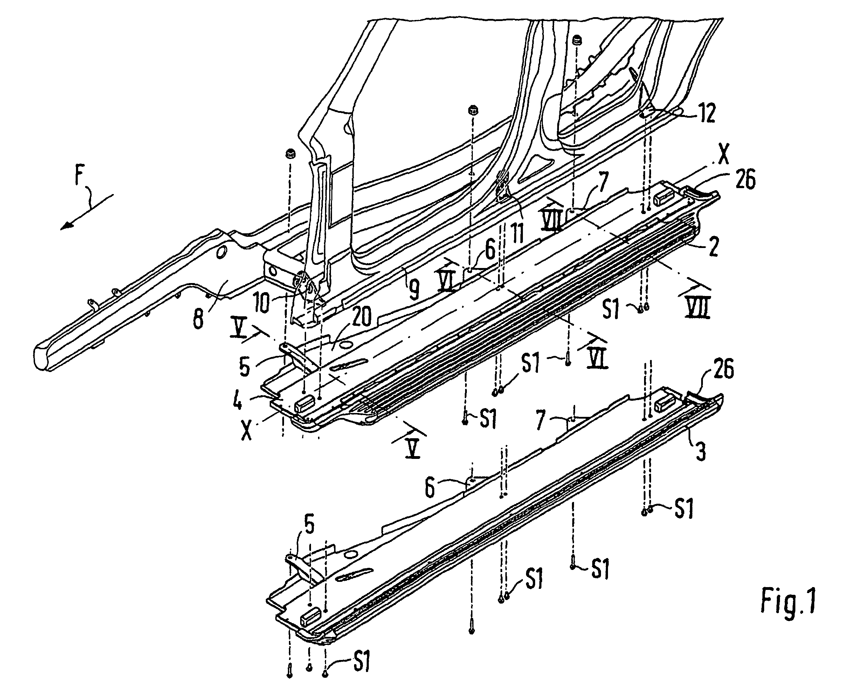

- Fig. 1: eine schaubildliche Darstellung der Vorrichtung mit einer Seitenwand des Fahrzeugs und einem ansetzbaren Trittbrett oder einer ansetzbaren Schwellerverkleidung an einem Trägerprofil,

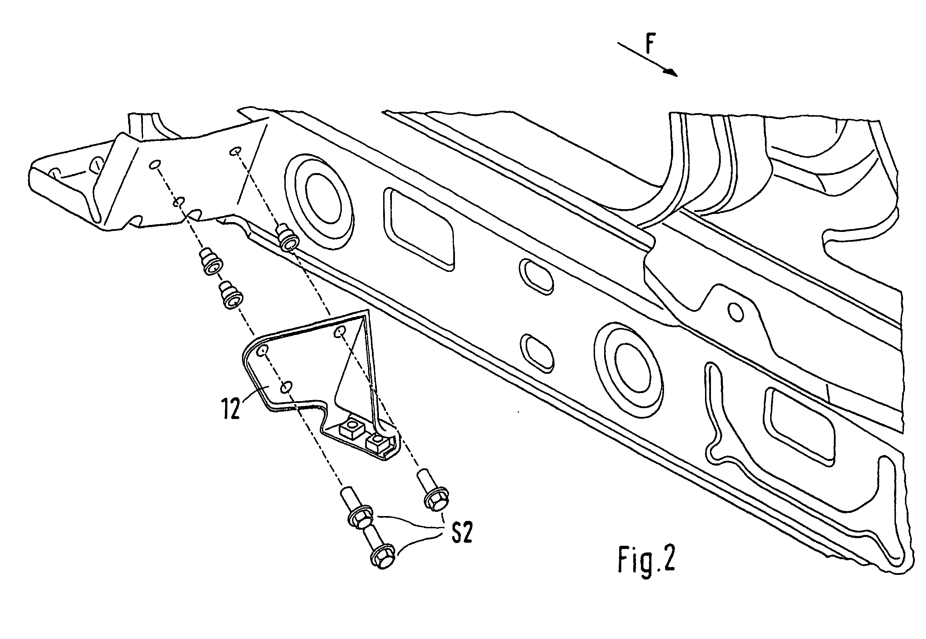

- Fig. 2: eine Ansicht auf eine hintenliegende Befestigungskonsole für das Trägerprofil,

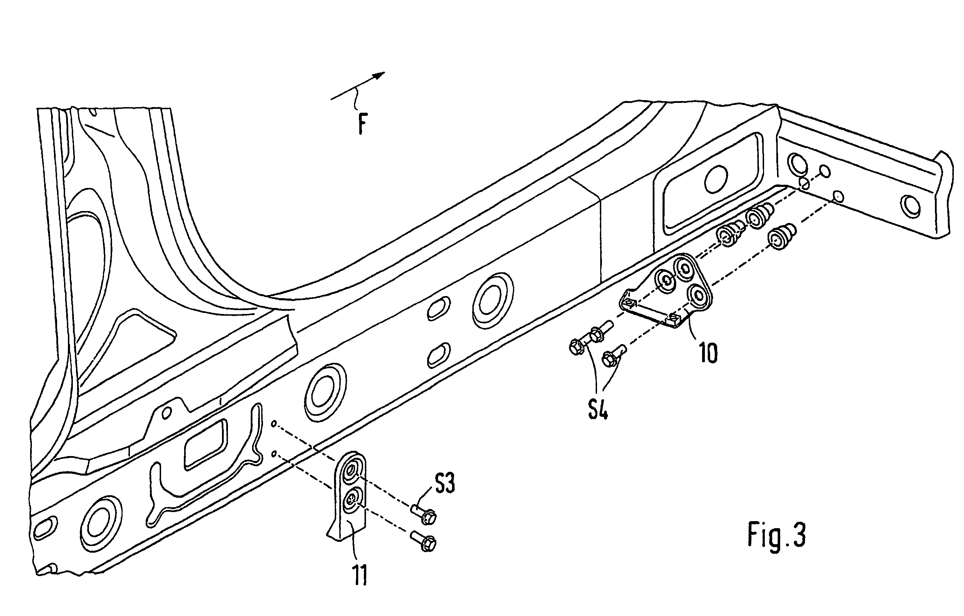

- Fig. 3: eine Ansicht auf eine vornliegende und eine mittlere Befestigungskonsole für das Trägerprofil,
- Fig. 4: eine schaubildliche Darstellung auf ein Trittbrett mit Endstücken und Schaumgummipads,
- Fig. 4a: eine schaubildliche Darstellung des Trägerprofils mit Befestigungskonsolen und Befestigungselementen,

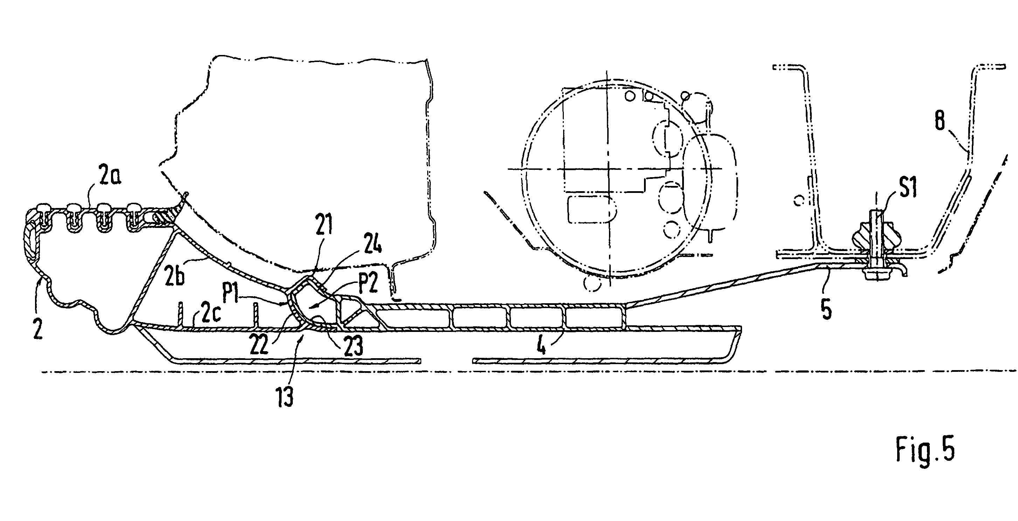

- Fig. 5: einen Querschnitt durch das Trittbrett mit Trägerprofil und vorderen Befestigungselementen nach der Linie V-V der Fig. 1,

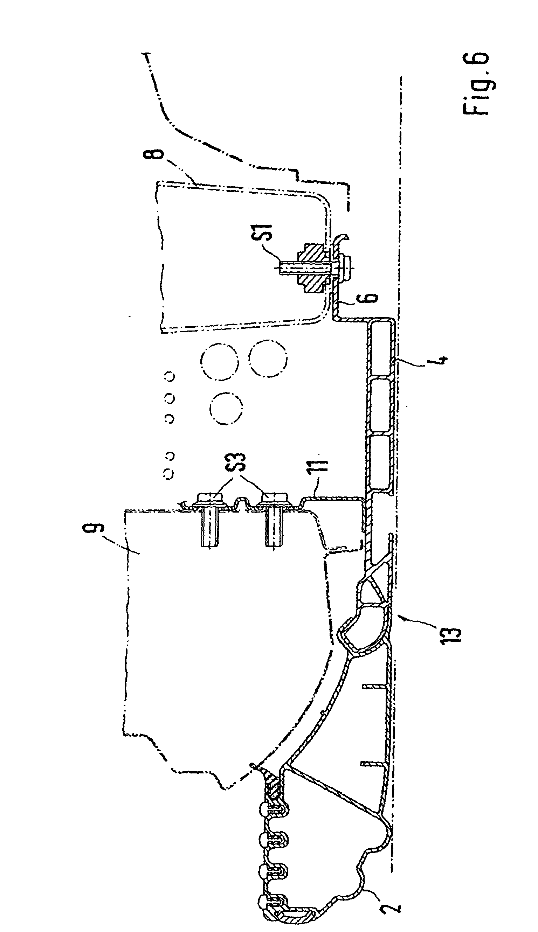

- Fig. 6: einen Querschnitt durch das Trittbrett mit Trägerprofil und mittleren Befestigungssteg nach der Linie VI-VI der Fig. 1,

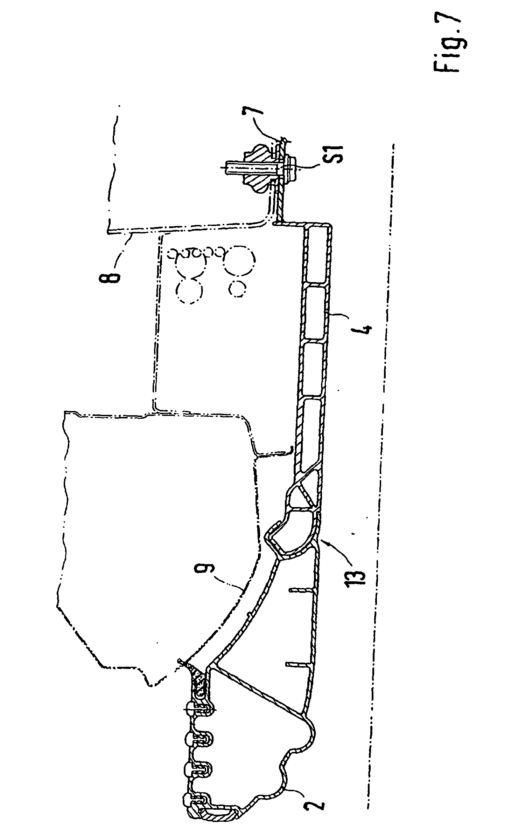

- Fig. 7: einen Querschnitt durch das Trittbrett mit Trägerprofil und hintenliegendem Befestigungselement nach der Linie VII-VII der Fig. 1 und

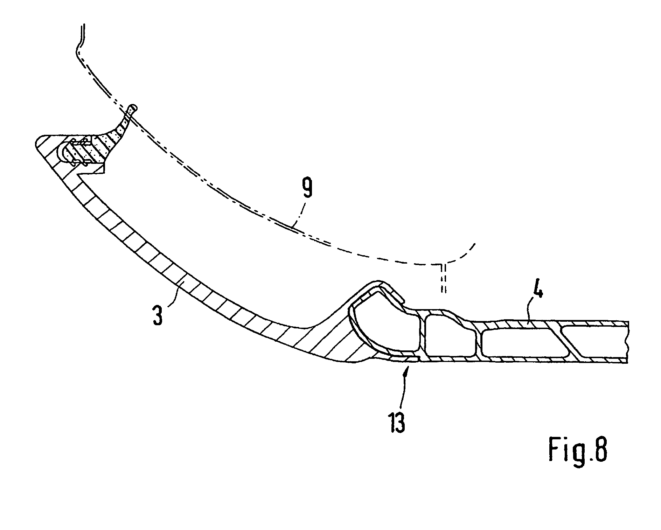

- Fig. 8: einen Querschnitt durch eine Schwellerverkleidung mit Trägerprofil.

Die Vorrichtung 1 zum Festsetzen von Anbauelementen, wie ein Trittbrett 2 oder eine Schwellerverkleidung 3 an das Fahrzeug umfaßt im wesentlichen ein Trägerprofil 4, das über Befestigungselemente bzw. Befestigungslaschen oder dgl. Mittel 5, 6 und 7 mit dem Fahrzeugaufbau am Längsträger 8 und/oder am Schweller 9 verbunden wird. Desweiteren erfolgt eine Befestigung an Konsolen 10, 11 und 12. Mit diesem fahrzeugfesten Trägerprofil 4 kann wahlweise das Trittbrett 2 oder die Schwellerverkleidung 3 mittels einer Einhäng- bzw. Einhakverbindung 13 zwischen Profillängskanten P1 und P2 des Trägerprofils 4 und des Trittbretts 2 und der Schwellerverkleidung 3 verbunden werden.

Die Befestigungskonsolen 10, 11 und 12 werden mit dem Fahrzeugaufbau über Schrauben S2, S3, S4 befestigt und diese Konsolen weisen gemeinsame horizontale Anschraubflächen für das Trägerprofil 4 auf. Die Schrauben S2, S3 und S4 sind hierzu etwa mittig des Trägerprofils 4 in einer senkrechten Längsebene X-X durchgeführt und in den Befestigungskonsolen 10, 11 und 12 beispielsweise in Muttern festsetzbar.

Die weitere Verbindung des Trägerprofils 4 mit dem Fahrzeugaufbau erfolgt über mit dem Trägerprofil 4 fest verbundene Elemente, wie beispielsweise Laschen 5, 6 und 7. Diese werden über Schrauben S1 mit dem Längsträger oder dem Schweller 9 verbunden.

Vorderseitig ist das Trägerprofil 4 mit einem sogenannten Verkleidungsblech 20 versehen, welches einen Zwischenraum zwischen dem Längsträger 8 und dem Schweller 9 abdecken soll.

Die Profillängskante P1 des Trittbretts 2 oder der Schwellerverkleidung 3 ist im Querschnitt konkav profiliert und die mit dieser korrespondierende weitere Profillängskante P2 des Trägerprofils 4 ist im Querschnitt konvex ausgebildet und beide Profillängskanten P1 und P2 bilden die formschlüssige Einhäng- bzw. Einhakverbindung 13 zwischen dem Trägerprofil 4 einerseits und dem Trittbrett 2 oder der Schwellerverkleidung 3 andererseits.

Die Profillängskante P1 des Trägerprofils 4 umfaßt eine an eine innere ausgerundete Wand 2b der Trittfläche 2a anschließenden oben liegenden abgewinkelten Schenkel 21, an die sich eine nach unten weisende ausgerundete Wand 22 anschließt. Diese bildet mit dem Schenkel 21 die konkave Aufnahme der Profillängskante P1.

Zu dieser Profillängskante P1 des Trägerprofils P1 ist korrespondierend die weitere Profillängskante P2 des Anbauelements 2; 3 angeordnet, welche eine der Wand 22 gegenüberstehende konvexe Wand 23 aufweist, an die sich eine formschlüssige im Schenkel 21 liegende Wand 24 anschließt. Diese im Querschnitt konkave Profillängskante P1 des Anbauelements 2, 3 bildet zusammen mit der konvexen Profillängskante P2 die Verbindung 13. Durch Niete oder Schrauben können diese Profillängskanten P1 und P2 fest miteinander aber lösbar verbunden werden.

Zwischen dem Trittbrett 2 und der Schwellerverkleidung 3 sind geräuschdämpfende bzw. schwingungsdämpfende Kunststoffpads 40 angeordnet, die beabstandet zueinander gelegen sein können.

Zur endseitigen Abdichtung des Trittbretts 2 der Schwellerverkleidung 3 sowie des Trägerprofils 4 ist ein Dichtelement 25 vorgesehen, auf dem anschließende Endkappen 26, 26a angeordnet sind.

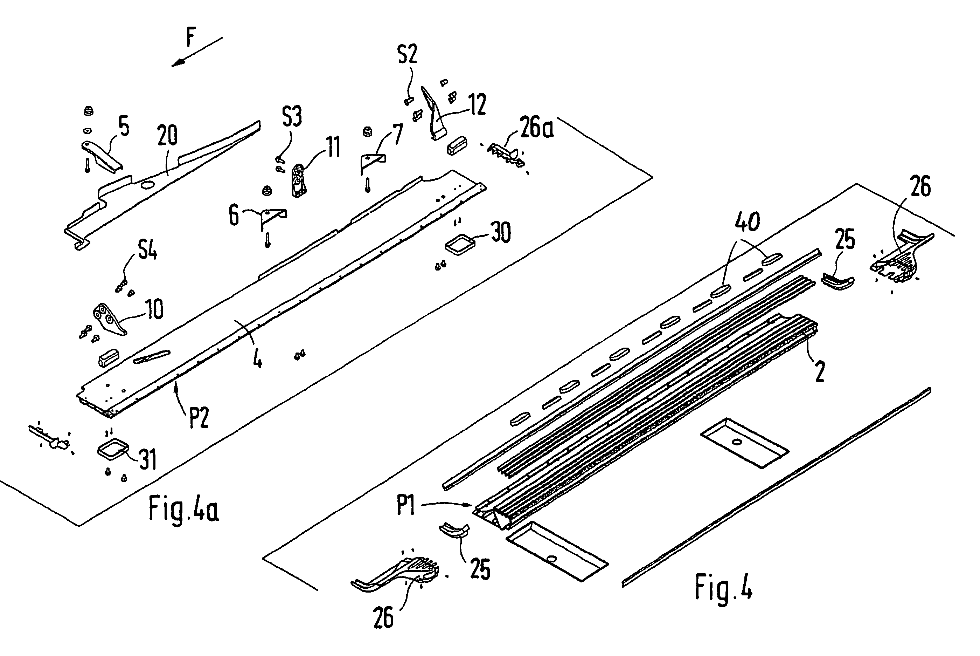

Im Trägerprofil 4 ist eine Aufnahme für einen Wagenheber integriert, die aus einer eingesetzten Verstärkung 30, 31 bestehen kann und welche vorderseitig und hinterseitig des Trägerprofils 4 angeordnet sein kann, was in Fig. 4a näher dargestellt ist.

## Patentansprüche

1. Vorrichtung (1) zum Festsetzen eines Anbauelements (2;3), an eine Aufbaustruktur eines Kraftfahrzeugs mittels Befestigungselemente, wobei das Aufbauelement sich entlang eines Schwellers (9) des Fahrzeugaufbaus erstreckt, wobei die Anbauelemente (2; 3) auswechselbar mit einem leistenartigen Trägerprofil (4) über miteinander korrespondierende und im Querschnitt konkav und konvex ausgebildete Profillängskanten (P1, P2) an den Anbauelementen (2; 3) und dem Trägerprofil (4) verbunden sind und das Trägerprofil (4) einerseits über am Fahrzeugaufbau (8, 9) beabstandet angeordnete Befestigungskonsolen (10, 11, 12) und andererseits über Befestigungselemente (5, 6, 7) am Trägerprofil (4) mit dem Fahrzeugaufbau (8, 9) verbunden ist, **dadurch gekennzeichnet, dass** wahlweise ein Trittbrett (2) bzw. eine Schwellerverkleidung (3) mittels einer Einhäng- bzw. Einhakverbindung zwischen den Profillängskanten (P1, P2) verbunden werden.

2. Vorrichtung nach Anspruch 1, **dadurch gekennzeichnet, daß** das Trittbrett (2) aus mindestens einem Hohlprofil mit einer horizontal ausgerichteten Trittfläche (2a) besteht, an die sich eine innere ausgerundete Wand (2b) und eine äußere etwa geradlinig ausgeführte Wand (2c) anschließt und an diese beiden Wände (2b, 2c) sich endseitig die im Querschnitt konkave Profillängskante (P1) der Anbauelemente (2; 3) anschließt, welche die im Querschnitt konvexe Profillängskante (P2) des Trägerprofils (4) beidseitig übergreift.

3. Vorrichtung nach den Ansprüchen 1 oder 2, **dadurch gekennzeichnet, daß** die konkave Profillängskante (P1) der Anbauelemente (2; 3) einen oben liegenden abgewinkelten Schenkel (21) umfaßt, der eine Profilkante (24) der konvexen Profillängskante (P2) des Trägerprofils (4) hakend übergreift und eine untenliegende anschließende Wand (22) der Anbauelemente (2; 3) ausgerundet ist und an einer korrespondierenden Wand (23) der Profillängskante (P2) des Trägerprofils (4) anliegt.

4. Vorrichtung nach den Ansprüchen 1, 2 oder 3, **dadurch gekennzeichnet, daß** die Anbauelemente (2; 3) mit demTrägerprofil (4) zwischen den Profillängskanten (P1 und P2) miteinander über Schrauben oder Niete verbunden sind.

5. Vorrichtung nach einem oder mehreren der vorhergehenden Ansprüche, **dadurch gekennzeichnet, daß** das Trägerprofil (4) über am vorderen, hinteren und mittleren Bereich des Fahrzeugaufbaus (8, 9) über Schrauben (S2, S3, S4) verbundene Befestigungskonsolen (10, 11, 12) an dem Fahrzeugaufbau (8, 9) über Schrauben (S1) befestigt ist und das Trägerprofil (4) zusätzlich über die Befestigungselemente (5, 6, 7) am Fahrzeugaufbau (8, 9) festsetzbar ist.

6. Vorrichtung nach einem oder mehreren der vorhergehenden Ansprüche, **dadurch gekennzeichnet, daß** die Befestigungskonsolen (10, 11, 12) etwa in einer horizontalen Ebene ausgerichtete Anschraubflächen für das Trägerprofil (4) aufweisen, wobei die Bohrungen für die Schrauben (S1) etwa in einer mittigen senkrechten Längsebene (X-X) des Trägerprofils (4) angeordnet sind.

7. Vorrichtung nach einem oder mehreren der vorhergehenden Ansprüche, **dadurch gekennzeichnet, daß** mit dem Trägerprofil (4) ein Verbindungsblech (20) verbunden ist, in das eine vordere Befestigungskonsole (5) integriert ist.

8. Vorrichtung nach einem oder mehreren der vorhergehenden Ansprüche, **dadurch gekennzeichnet, daß** zwischen den Anbauelementen (2; 3) und dem Schweller (9) oder dem Längsträger (8) des Fahrzeugaufbaus beabstandete (40) Schaumpolster (40) angeordnet sind.

9. Vorrichtung nach einem oder mehreren der vorhergehenden Ansprüche, **dadurch gekennzeichnet, daß** die Anbauelemente (2; 3) an einem freien Ende mit einer Endkappe (26) abgeschlossen sind und ein Dichtelement (25) zwischen der Endkappe (26) und dem freien Ende der Anbauelemente (2; 3) vorgesehen ist.

## Claims

1. A device (1) for fixing an attachment (2; 3) to a body structure of a motor vehicle by means of fastening members, wherein the attachment extends along a sill (9) of the vehicle body, wherein the attachments (2; 3) are replaceably connected to a strip-type supporting section (4) by mutually corresponding profiled longitudinal edges (P1, P2) - of concave and convex cross-section - on the attachments (2; 3) and the supporting section (4), and the supporting section (4) is connected to the vehicle body (8, 9) on one side by fastening brackets (10, 11, 12) arranged at intervals on the vehicle body (8, 9) and on the other side by fastening members (5, 6, 7) on the supporting section (4), **characterised in that** either a running board (2) or a sill covering (3) is connected by means of a clevis- or hook-type connection between the profiled longitudinal edges (P1, P2).

2. A device according to claim 1, **characterised in that** the running board (2) comprises at least one hollow section with a horizontal tread (2a) adjoined by an inner, rounded wall (2b) and an outer, substantially straight wall (2c), and these two walls (2b, 2c) are adjoined at their ends by the profiled longitudinal edge (P1) - of concave cross-section - of the attachments (2; 3), said profiled longitudinal edge (P1) engaging over the profiled longitudinal edge (P2) - of convex cross-section - of the supporting section (4) on both sides.

3. A device according to claim 1 or 2, **characterised in that** the concave profiled longitudinal edge (P1) of the attachments (2; 3) comprises an upper bent arm (21) which engages over a profiled edge (24) of the convex profiled longitudinal edge (P2) of the supporting section (4) in the manner of a hook, and a lower adjoining wall (22) of the attachments (2; 3) is rounded and rests against a corresponding wall (23) of the profiled longitudinal edge (P2) of the supporting section (4).

4. A device according to claim 1, 2 or 3, **characterised in that** the attachments (2; 3) and the supporting section (4) are connected to one another by screws or rivets between the profiled longitudinal edges (P1 and P2).

5. A device according to one or more of the preceding claims, **characterised in that** the supporting section (4) is fastened to the vehicle body (8, 9) by screws (S1) via fastening brackets (10, 11, 12) connected to the front, rear and middle region of the vehicle body (8, 9) by screws (S2, S3, S4), and the supporting section (4) is additionally attachable to the vehicle body (8, 9) by the fastening members (5, 6, 7).

6. A device according to one or more of the preceding claims, **characterised in that** the fastening brackets (10, 11, 12) have screw-on surfaces, substantially arranged in a horizontal plane, for the supporting section (4), the bores for the screws (S1) being substantially arranged in a central, vertical longitudinal plane (X-X) of the supporting section (4).

7. A device according to one or more of the preceding claims, **characterised in that** a connecting plate (20), into which a front fastening bracket (5) is integrated, is connected to the supporting section (4).

8. A device according to one or more of the preceding claims, **characterised in that** spaced foam pads (40) are arranged between the attachments (2; 3) and the sill (9) or the longitudinal member (8) of the vehicle body.

9. A device according to one or more of the preceding claims, **characterised in that** the attachments (2; 3) are closed at a free end by an end cap (26), and a sealing member (25) is provided between the end cap (26) and the free end of the attachments (2; 3).

## Revendications

1. Suspension de roue à la carrosserie d'un véhicule automobile comportant une jambe d'amortisseur qui est soutenue au moyen de paliers disposés en vis-à-vis dans un élément de palier, la jambe d'amortisseur (2) étant placée obliquement et soutenue dans l'élément de palier, un élément de palier, réalisé en tant que coquille d'appui (3 ; 3a), étant prévue pour la jambe d'amortisseur (2) dans une traverse (19) reliée à la carrosserie du véhicule, et est soutenue à la manière d'un joint de cardan et/ou mobile en pivotement par deux tourillons (7, 8 ; 7a, 8a) situés sur un axe de pivotement (9) commun, et la coquille d'appui (3 ; 3a) étant disposée détachée d'un faux-châssis (20) supportant la suspension de roue mobile en pivotement.

2. Suspension de roue selon la revendication 1, **caractérisée en ce que** les tourillons (7, 8) sont formés sur la coquille d'appui (3) et réalisés d'un seul tenant avec celle-ci et s'étendent radialement vers l'extérieur depuis une zone de bordure extérieure de la coquille d'appui (3) et sont maintenus dans des paliers élastiques (12).

3. Suspension de roue selon la revendication 1, **caractérisée en ce que** la coquille d'appui (3a) présente des alésages de réception (31) pour les tourillons (7a, 8a), lesquels comprennent des douilles de palier (32, 33) qui sont disposées en vis-à-vis et forment un axe de pivotement commun, et qui sont entourés chacun par un élément de douille (34) élastique et une coquille extérieure (34a), et sont fixés au moyen d'une vis (35) sur la traverse (5).

4. Suspension de roue selon les revendications 1 ou 2, **caractérisée en ce que** la coquille (3) présente un renfoncement en forme de pot, disposé au centre, avec une surface de liaison (3b) plane, se raccordant à celui-ci et réalisée en tant que surface annulaire, à laquelle se raccorde une paroi (3c) approximativement cylindrique sur laquelle sont formés et réalisés les tourillons (7, 8) dépassant radialement.

5. Suspension de roue selon les revendications 1, 2 ou 4, **caractérisée en ce que** les tourillons (7, 8) de la coquille d'appui (3) sont maintenus chacun dans des éléments élastiques (12) qui sont fixés, au moyen d'un collier de palier (18), sur la traverse (5) du véhicule.

6. Suspension de roue selon les revendications 1, 2 ou 5, **caractérisée en ce que** les tourillons (7, 8) sont disposés dans une douille de glissement à l'intérieur de l'élément élastique (12) et sont maintenus mobiles en pivotement.

7. Suspension de roue sur la carrosserie d'un véhicule automobile, comportant une jambe d'amortisseur qui est soutenue au moyen de tourillons maintenus dans un élément de palier, la jambe d'amortisseur étant guidée suivant un angle, obliquement depuis le support de roue de la suspension de roue, vers un support supérieur et s'étendant entre des bras oscillants supérieurs (R) de la suspension de roue, en direction du plan médian longitudinal du véhicule, et un support élastique (16) supérieur de la jambe d'amortisseur (2) comprenant un élément d'appui (4) dans une coquille d'appui (3) qui est maintenue à la manière d'un joint de cardan et/ou mobile en pivotement, par des tourillons (7, 8, 7a, 8a) dans un évidement (19) de la traverse (5), séparé d'un faux-châssis (20) supportant la suspension de roue mobile en pivotement.

8. Suspension de roue selon les revendications 2, 5 ou 6, **caractérisée en ce que** la traverse (5) est réalisée à deux coquilles et présente des logements semi-circulaires pour les éléments élastiques (12) des tourillons (7, 8), auxquels font face les colliers (8) réalisés en forme de demi-cercle.

9. Suspension de roue sur la carrosserie d'un véhicule automobile comportant un ressort pneumatique qui est soutenu au moyen de tourillons maintenus dans un élément de palier, le ressort pneumatique (L) étant placé obliquement suivant un angle et relié directement à une coquille d'appui (3), et celui-ci comprend des tourillons (7, 8, 7a, 8a) disposés en vis-à-vis sur un axe de pivotement (9), lesquels sont soutenus à la manière d'un joint de cardan et/ou mobiles en pivotement dans un support (5) solidaire du véhicule, séparés d'un faux-châssis (20) supportant la suspension de roue mobile en pivotement.
